# EUROPEAN PATENT SPECIFICATION

(11) **EP 2 236 396 B1**
(45) Date of publication and mention of the grant of the patent: **18.07.2012**
(21) Application number: 10156233.8
(22) Date of filing: 11.03.2010
(51) Int. Cl.: B62H 1/04

(54) **Bicycle kickstand**
Fahrrad Hauptständer
Support pour bicyclette

(30) Priority: 31.03.2009 IT PD20090072
(43) Date of publication of application: 06.10.2010
(73) Proprietor: Ursus S.P.A., 36027 Rosa' VI (IT)
(72) Inventor: Ferronato, Sergio, 36027, ROSA' VI (IT)
(74) Representative: Modiano, Micaela Nadia

(56) References cited:
- DE-A1-102005 040 988
- DE-U1- 8 310 686
- DE-U1- 20 016 416
- DE-U1-202005 004 173
- NL-C2- 1 031 066

## Description

The present invention refers to a bicycle kickstand with two supporting rods.

Nowadays there is an increasing number of bicycle kickstands with two supporting rods, one on each side, and the use of this type of kickstand is expanding in line with the growing demand for electric bicycles, city bikes especially fitted out for transporting loads, and in general bicycles that are relatively heavy or which can be loaded with masses that considerably increase their original weights.

These bicycles need to be supported when they are not in use by kickstands with two supporting rods, which provide simultaneous double support and maintenance of the centre of gravity of the bicycle on a vertical plane which is also the fundamental symmetry of the bicycle itself, with a consequent stability of the bicycle that is much greater than that obtained with the adoption of a lateral stand, which causes the shifting of the centre of gravity of the bicycle from one of its sides, with the consequent creation of a torque owing to the weight force, which would cause the bicycle to fall over in the absence of such lateral stand.

Bicycle kickstands with two rods of the known type are generally defined by a single metal bar folded substantially in a U or V-shape, to the central section of which are associated the rotary pivot and reversible means of locking the bicycle kickstand in a first usage configuration, lowered and for support, or in a second usage configuration, raised and for travel.

These known bicycle kickstands with two rods, although widespread and well-regarded, present a number of drawbacks.

The main drawback is linked to the fact that the width of the angle defined by the axes of the two supporting rods is determined by the compromise between the need for the distance between the points of support of the rods at ground level to be sufficiently wide to ensure stability for the bicycle when the kickstand is in the lowered configuration to support the bicycle itself, and the need for such distance not to be so wide that the rods in the raised configuration would be a hindrance for a user, by laterally protruding from the frame of the bicycle near the zone travelled by the trajectory of the pedals.

Indeed, since the two rods are solidly connected, known bicycle kickstands often present at least one of the two cited drawbacks: either the distance between the points of support of the two rods is reduced, and they are not very stable, or they present a considerable distance between the points of support, conferring stability on the supported bicycle but at the same time presenting annoying protrusions for a cyclist when in the raised configuration.

DE 83 10 686 U1 discloses a kickstand having a combination of structural features as set forth in the precharacterizing portion of the appended claim 1.

The aim of the present invention is to devise a bicycle kickstand with two supporting rods that is capable of overcoming the cited drawbacks of bicycle kickstands with two rods of the known type.

Within this aim, an object of the invention is to provide a bicycle kickstand with two rods that is capable of providing excellent stability to the bicycle in the lowered usage configuration and minimal hindrance in the raised, inactive configuration.

Another object of the invention is to provide a bicycle kickstand with two rods that is installable on bicycles that are already known and in use.

A further object of the invention is to provide a bicycle kickstand with two supporting rods that is intuitively manoeuvrable with the same facility as bicycle kickstands with two rods of the known type.

A further object of the invention is to provide a bicycle kickstand with two rods that is structurally simple and easy to use, and which can be produced using known systems and technologies, and at low costs.

In accordance with the invention, there is provided a bicycle kickstand as defined in the appended claims.

Further characteristics and advantages of the invention will become better apparent from the following detailed description of a preferred, but not exclusive, embodiment of the bicycle kickstand with two rods according to the invention, illustrated by way of a non-limiting example in the accompanying drawings wherein:

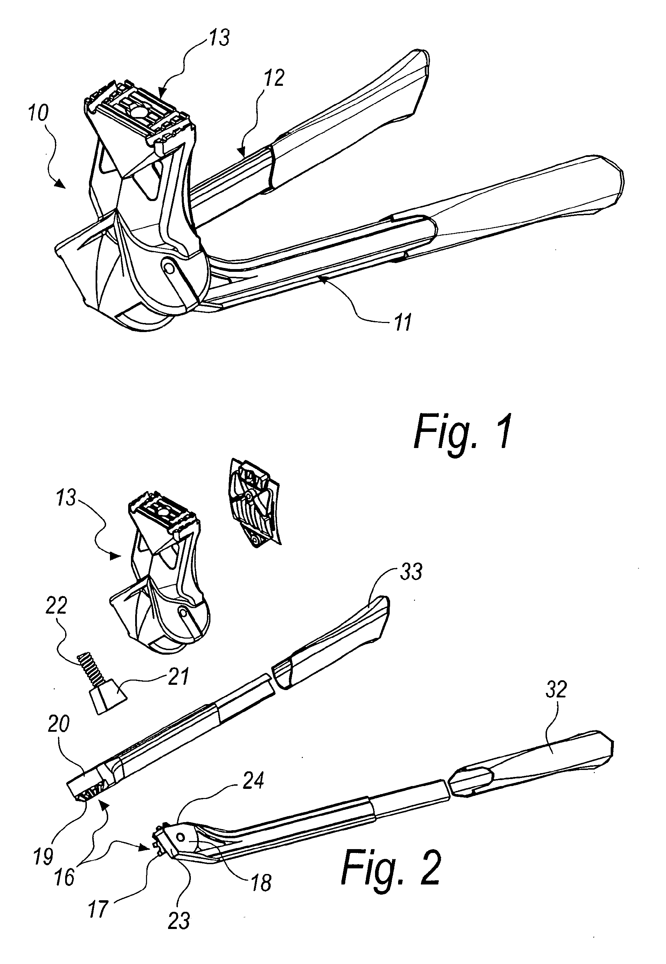

Figure 1 is a perspective view of a bicycle kickstand according to the invention, in the raised and inactive configuration;
Figure 2 is an exploded view of figure 1;
Figure 3 is a side view of a detail of a rod of a bicycle kickstand according to the invention;
Figure 4 is a front view of the detail of figure 3;
Figure 5 is a front section view of the bicycle kickstand according to the invention;
Figure 6 is a top view of the bicycle kickstand according to the invention in the raised and inactive configuration;
Figure 7 is a top view of the bicycle kickstand according to the invention in the lowered usage configuration.

With reference to the figures, a bicycle kickstand with two supporting rods according to the invention is generally designated in the figures with the reference numeral 10.

The bicycle kickstand 10 comprises two supporting rods, respectively a first rod 11 and a second rod 12.

Each rod, 11 and 12, is rotatably coupled at one end to a central block 13 to be fixed to a frame of a bicycle or the like.

Each rod 11 and 12 presents, at its pivot 14 and 15 respectively for rotary coupling with the block 13, kinematic means 16 adapted to transmit the rotation of one rod to the other rod, depending on which of the two rods 11 or 12 is moved by the foot of a user.

In the embodiment of the invention described here by way of a non-limiting example of the invention, the kinematic means 16 are constituted by a bevel gear pair.

In particular, the kinematic means 16 comprise a first bevel gear arc 17 on the pivoting head 18 of the first rod 11, and a second corresponding bevel gear arc 19 formed on the pivoting head 20 of the second rod 12.

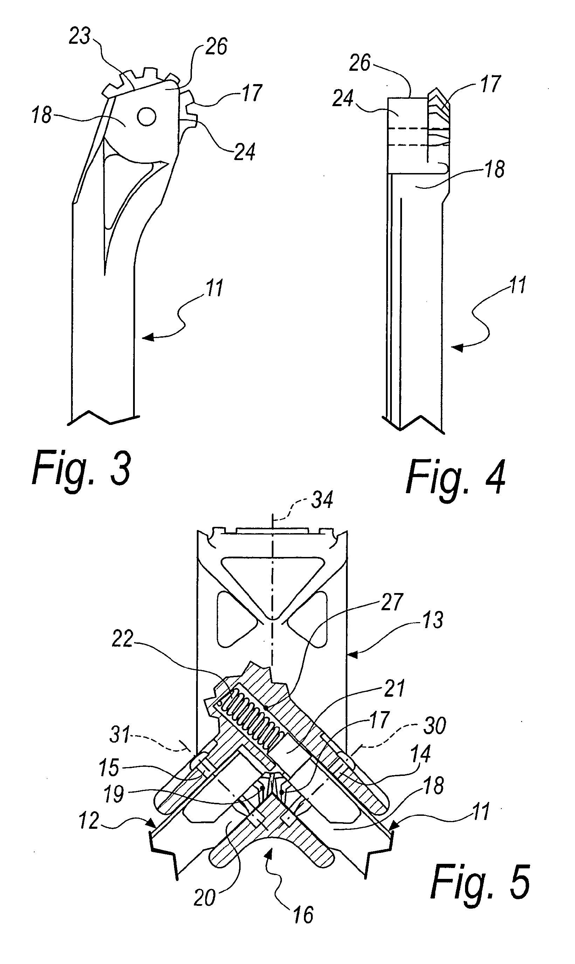

The bevel gears 17 and 19 are contoured to produce, by reciprocally meshing as shown in figure 5, a symmetrical rotary motion of the two rods 11 and 12.

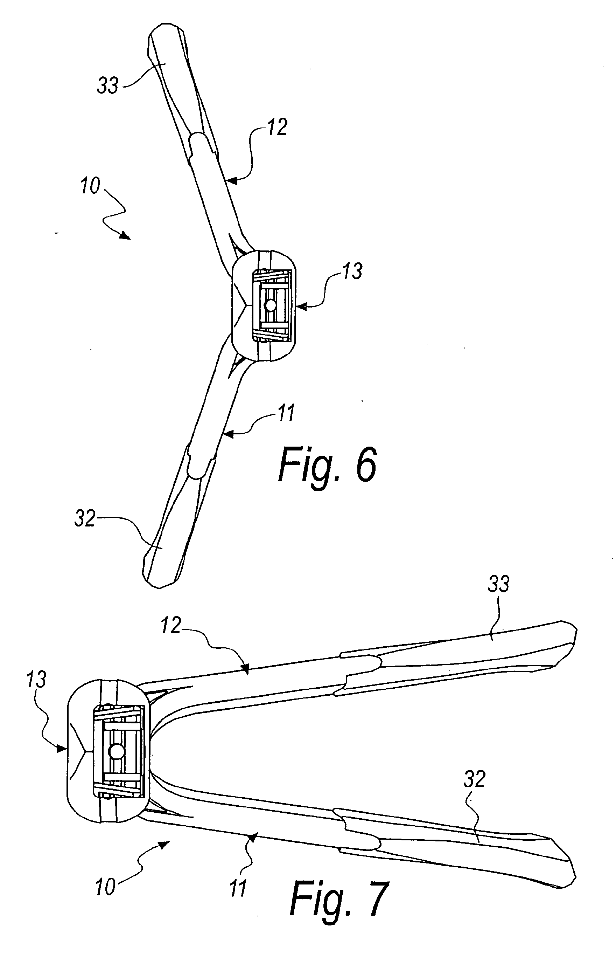

The rotary motion of the two rods 11 and 12 is done between a first lowered configuration for resting on the ground, exemplified in figure 6 and a second raised and inactive configuration, exemplified in figure 7.

The bicycle kickstand 10 according to the invention comprises means for the reversible locking of the two rods in the two configurations with rods lowered and rods raised.

In the embodiment of the bicycle kickstand with two rods 10 according to the invention described here, by way of a non-limiting example of the invention, the reversible locking means are achieved by a pusher 21 1 which is pressed by a helical compression spring 22 alternately against one of two surfaces 23 and 24 formed on the two head, for example 18, of one of the two rods, for example the first rod 11.

The two surfaces 23 and 24 are shaped complementarily with respect to the pushing face of the pusher 21, and in the exemplary embodiment described here are substantially flat.

Such two surfaces 23 and 24 are joined by an end connecting portion 26, of the head 18 of the rod 11, so as to form a sort of cam.

The pusher 21 and the spring 22 are located in a corresponding housing 27 formed in the block 13.

The operation of the bicycle kickstand 10 according to the invention is the following.

If the bicycle kickstand 10 is in the lowered configuration, i.e. for use, as in Figure 6, the pusher 21 pushes against the first surface 23 of the head 18 of the first rod 11, locking the lowered configuration of the bicycle kickstand 10.

To change to the raised, inactive configuration of the bicycle kickstand, which is for using the bicycle, as in Figure 7, it is sufficient to rotate one of the two rods, the first 11 or the second 12, upwards to obtain the symmetric and simultaneous rotation of the other rod as well.

During the rotation of the rod 11, the pusher 21 is pushed upwards by the cam movement of the end connecting portion 26 of the head 18, and it then pushes against the second surface 24 and locks the bicycle kickstand 10 in the raised configuration.

The axes of rotation 30 and 31 of each supporting rod 11 and 12 are oriented in such a way that the contact feet 32 and 33 of the rods 11 and 12
- move away from the plane of symmetry 34 of the kickstand 10 and of the bicycle during transition to the lowered configuration for use, and
- move toward the plane of symmetry 34 of the kickstand 10 and of the bicycle during transition to the raised, inactive configuration.

In practice it has been found that the bicycle kickstand according to the invention fully achieves the intended aim and objects.

In particular, with the invention, a bicycle kickstand with two rods has been devised that is capable of providing excellent stability to the bicycle in the lowered usage configuration and minimal hindrance in the raised, inactive configuration, as a result of the peculiar inclination of the axes of rotation of the two rods, and the kinematic means that allow the symmetric and simultaneous rotary motion of the two rods.

In addition, with the invention, a bicycle kickstand with two rods has been devised that is installable on bicycles that are already known and in use.

Further, with the invention, a bicycle kickstand with two supporting rods has been devised that is intuitively manoeuvrable with the same facility as bicycle kickstands with two rods of the known type.

Not least, with the present invention, a bicycle kickstand with two rods has been devised that is structurally simple and easy to use, and which can be produced using known systems and technologies, and at low costs.

The invention, thus conceived, is capable of undergoing numerous modifications and variants, all within the scope of the appended claims; in addition, all the details may be replaced by other technically equivalent elements.

In practice the materials employed, as well as the dimensions and the contingent shapes, may be any according to requirements and to the state of the art.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A kickstand (10) with two supporting rods, each one of the two supporting rods (11, 12), coupled rotatably to a central block (13) to be fixed to a frame of a bicycle or the like, having, at its pivot (14, 15) for rotary coupling to said block (13), kinematic means (16) adapted to transmit the rotation of one rod to the other rod, **characterized in that** said kinematic means (16) are constituted by a bevel gear pair.

2. The kickstand according to claim 1, **characterized in that** said kinematic means (16) comprise a first bevel gear arc (17) on the pivoting head (18) of a first rod (11) and a second corresponding bevel gear arc (19) that is formed on the pivoting head (20) of the second rod (12), said arcs being contoured to produce a symmetrical rotary motion of the two rods (11, 12) between a first lowered configuration for resting on the ground and a second raised inactive configuration.

3. The kickstand according to the preceding claims, **characterized in that** the axes of rotation (30, 31) of each supporting rod (11, 12) are oriented so that the contact feet (32, 33) of said rods (11, 12)
- move away from the plane of symmetry (34) of the kickstand (10), and of the bicycle, during transition to the lowered configuration for use, and
- move toward the plane of symmetry (34) of the kickstand (10), and of the bicycle, during transition to the raised inactive configuration.

4. The kickstand according to the preceding claims, **characterized in that** it comprises means for reversible locking of the two rods in the two configurations with lowered rods and with raised rods.

5. The kickstand according to claim 4, **characterized in that** said reversible locking means are constituted by a pusher (21), which is pressed by a helical compression spring (22) alternately against one of two surfaces (23, 24) formed on the head (18) of a rod (11), said surfaces (23, 24) being shaped complementarily with respect to the pushing face of the pusher (21) and being joined by an end connecting portion (26) of the head (18) of the rod (11) so as to form a sort of cam.

## Patentansprüche

1. Klappständer (10) mit zwei Tragstangen, wobei jede der zwei Tragstangen (11, 12), die drehbar mit einem mittleren Block (13) verbunden sind, der an einem Rahmen eines Fahrrades oder dergleichen zu befestigen ist, bei ihrem Schwenkpunkt (14, 15) für ein drehbares Verbinden mit dem Block (13) kinematische Einrichtungen (16) aufweisen, die ausgebildet sind, um die Drehung einer Stange auf die andere Stange zu übertragen, **dadurch gekennzeichnet, dass** die kinematischen Einrichtungen (16) durch ein Kegelradpaar gebildet sind.

2. Klappständer nach Anspruch 1, **dadurch gekennzeichnet, dass** die kinematischen Einrichtungen (16) einen ersten Kegelradbogen (17) an dem Schwenkkopf (18) einer ersten Stange (11) und einen zweiten entsprechenden Kegelradbogen (19) aufweisen, der an dem Schwenkkopf (20) der zweiten Stange (12) ausgebildet ist, wobei die Bögen so profiliert sind, dass eine symmetrische Drehbewegung der zwei Stangen (11, 12) zwischen einer ersten abgesenkten Konfiguration für ein Aufliegen auf dem Boden und einer zweiten angehobenen inaktiven Konfiguration erzeugt wird.

3. Klappständer nach den vorhergehenden Ansprüchen, **dadurch gekennzeichnet, dass** die Drehachsen (30, 31) einer jeden Tragstange (11, 12) so orientiert sind, dass die Kontaktfüße (32, 33) der Stangen (11, 12)
- sich von der Symmetrieebene (34) des Klappständers (10) und des Fahrrades wegbewegen, während eines Überganges in die abgesenkte Konfiguration zur Nutzung, und
- sich hin zur Symmetrieebene (34) des Klappständers (10) und des Fahrrades hinbewegen, während eines Übergangs in die angehobene inaktive Konfiguration.

4. Klappständer nach den vorhergehenden Ansprüchen, **dadurch gekennzeichnet, dass** er Einrichtungen für ein reversibles Verriegeln der zwei Stangen in den zwei Konfigurationen mit abgesenkten Stangen und mit angehobenen Stangen aufweist.

5. Klappständer nach Anspruch 4, **dadurch gekennzeichnet, dass** die reversiblen Verriegelungseinrichtuqgen durch eine Drückeinrichtung (21) gebildet sind, die durch eine helixförmige Druckfeder (22) abwechselnd gegen eine von zwei Flächen (23, 24) gedrückt wird, die auf dem Kopf (18) einer Stange (11) ausgebildet sind, wobei die Flächen (23, 24) komplementär bezüglich der Drückfläche der Drückeinrichtung (21) geformt sind und durch einen Endverbindungsabschnitt (26) des Kopfes (18) der Stange (11) verbunden sind, so dass eine Art von Nocke gebildet wird.

## Revendications

1. Béquille (10) avec deux tiges de support, chacune des deux tiges de support (11, 12), couplée de manière rotative à un bloc central (13) à fixer sur un cadre d'une bicyclette ou similaire, ayant, au niveau de son pivot (14, 15) pour un couplage en rotation audit bloc (13), des moyens cinématiques (16) adaptés pour transmettre la rotation d'une tige à l'autre, **caractérisée en ce que** lesdits moyens cinématiques (16) sont constitués par une paire de roues coniques.

2. Béquille selon la revendication 1, **caractérisée en ce que** lesdits moyens cinématiques (16) comprennent un premier arc de roue conique (17) sur la tête pivotante (18) d'une première tige (11) et un second arc de roue conique (19) correspondant, formé sur la tête pivotante (20) de la seconde tige (12), lesdits arcs étant profilés pour produire un mouvement rotatif symétrique des deux tiges (11, 12) entre une première configuration abaissée pour reposer sur le sol et une seconde configuration levée inactive.

3. Béquille selon les revendications précédentes, **caractérisée en ce que** les axes de rotation (30, 31) de chaque tige de support (11, 12) sont orientés de sorte que les pieds de contact (32, 33) desdites tiges (11, 12)
s'éloignent du plan de symétrie (34) de la béquille (10) et de la bicyclette pendant la transition vers la configuration abaissée pour utilisation, et
se déplacent vers le plan de symétrie (34) de la béquille (10) et de la bicyclette pendant la transition vers la configuration levée inactive.

4. Béquille selon les revendications précédentes, **caractérisée en ce qu'**elle comprend des moyens pour un blocage réversible des deux tiges dans les deux configurations avec les tiges abaissées et avec les tiges levées.

5. Béquille selon la revendication 4, **caractérisée en ce que** lesdits moyens de blocage réversible sont constitués par un poussoir (21) qui est comprimé par un ressort de compression hélicoïdal (22) alternativement contre l'une des deux surfaces (23, 24) formées sur la tête (18) d'une tige (11), lesdites surfaces (23, 24) étant formées de manière complémentaire par rapport à la face de poussée du poussoir (21) et étant assemblées par une partie de raccordement d'extrémité (26) de la tête (18) de la tige (11) de façon à former une sorte de came.
